# EUROPÄISCHE PATENTANMELDUNG

(11) **EP 1 217 876 A2**
(43) Veröffentlichungstag der Anmeldung: **26.06.2002**
(21) Anmeldenummer: 01129809.8
(22) Anmeldetag: 14.12.2001
(51) Int. Cl.: H05B 41/288

(54) **Einrichtung zum Starten und Betreiben einer Gasentladungslampe in einem Kraftfahrzeug**

(30) Priorität: 19.12.2000 DE 10063324
(71) Anmelder: Hella KG Hueck & Co., 59552 Lippstadt (DE)
(72) Erfinder: Radtke, Volker, 33330 Gütersloh (DE)

(57) **Zusammenfassung**

Beschrieben wird eine Einrichtung zum Starten und Betreiben einer Gasentladungslampe in einem Kraftfahrzeug. Die erfindungsgemäße Einrichtung weist einen Schaltregler auf und einen Regler zur Regelung der Ausgangleistung des Schaltreglers. Ein sekundärseitiges Wechselsignal des Schaltreglers liegt am Eingang eines Spannungsvervielfachers an, der im Leerlaufbetrieb eine Zündhilfsspannung zum Starten der Gasentladungslampe erzeugt.

Die Einrichtung weist des weiteren eine Spannungsteileranordnung auf, die einen von der Ausgangsspannung des Gleichspannungswandlers abhängigen Maximalspannungswert erzeugt, sowie einen Begrenzer, der den Wert des vom Regler an den Schaltregler gegebenen Regelsignals auf einen Maximalspannungswert begrenzt. Hierdurch kann die mittlere Wandlerfrequenz im Leerlaufbetrieb möglichst hoch und der Innenwiderstand des Spannungsvervielfachers klein gehalten werden.

## Beschreibung

Die Erfindung betrifft eine Einrichtung zum Starten und Betreiben einer Gasentladungslampe in einem Kraftfahrzeug, mit einem primärgetakteten Schaltregler zur Versorgung einer Lampenansteuerungseinrichtung für die Gasentladungslampe, mit einer Einrichtung zur Erfassung der Ausgangsleistung des Schaltreglers, mit einem Regler, der aufgrund der Ausgangsleistung ein Regelsignal zur Beeinflussung des Primärstroms des Schaltreglers erzeugt, mit einem Begrenzer, zur Begrenzung des Regelsignals und mit einer Steuereinrichtung, die der Gasentladungslampe einen Leistungssollwert vorgibt, und mit einem Spannungsvervielfacher, der aus einem sekundärseitigen Wechselsignal des Schaltreglers eine Zündhilfsspannung erzeugt, die während des Zündvorgangs zu der Leerlaufspannung des Schaltreglers hinzuaddiert wird.

Eine vergleichbare Einrichtung ist in der DE 43 31 952 A1 beschrieben. Bei dieser bekannten Einrichtung, die auch als Vorschaltgerät bezeichnet wird, gibt die Steuereinrichtung in der Lampenanlaufphase dem Regler einen erhöhten Leistungssollwert vor und steuert gleichzeitig den Begrenzer an, so daß der Begrenzer während der Anlaufphase einen erhöhten maximalen Primärstrom zuläßt. In der stationären Brennphase der Gasentladungslampe bewirkt die Steuereinrichtung, daß sowohl der Leistungssollwert als auch die maximal vom Begrenzer zugelassene Primärstromstärke auf einen niedrigeren Wert abgesenkt ist. Hierdurch wird eine Überlastung des Schaltreglers bei Absinken der Bordnetzspannung vermieden.

Zum Zünden einer Gasentladungslampe muß das Vorschaltgerät eine sehr hohe Spannung für den Primärkreis des Zündgerätes erzeugen; aus dieser Spannung kann das Zündgerät dann den notwendigen Hochspannungszündimpuls erzeugen. Diese Spannung liegt typisch bei U = 800V und damit deutlich über der typischen Lampenleerlaufspannung, die das Vorschaltgerät während der Zündung erzeugt.

Hierzu wird eine zweite Spannung erzeugt, die zur Leerlaufspannung addiert wird. Eine Möglichkeit diese Spannung zu erzeugen ist die Verwendung eines Spannungsvervielfachers, der als Eingangssignal die sekundäre Diodenspannung des Gleichspannungswandlers benutzt. Die Ausgangsspannung des Spannungsvervielfachers sollte möglichst hoch und sein Innenwiderstand möglichst klein sein, damit eine ausreichende Anzahl von Zündimpulsen erzeugt werden kann.

Der Ausgangsspannungswert des Spannungsvervielfachers wird wesentlich durch den Hub des an seinem Eingang anliegenden Wechselsignals, welches er vom Gleichspannungswandler erhält, bestimmt. Der Innenwiderstand ergibt sich aus der Größe der umzuladenden Kapazitäten und entscheidend aus der Frequenz des Wechselsignals. Hierbei entsteht das Problem, daß der Gleichspannungswandler im Leerlauf lediglich eine geringe Grundlast sieht und somit auch nur eine geringe Leistung übertragen muß, um die Leerlaufspannung aufrechtzuhalten. Da der Gleichspannungswandler in der Lage ist, mit jedem Schaltzyklus vergleichsweise sehr viel mehr Energie zu übertragen, reduziert sich in diesem Arbeitspunkt automatisch sehr deutlich die mittlere Arbeitsfrequenz des Wandlers. Dieses hat zur Folge, daß der Innenwiderstand des Spannungsvervielfacher zu hoch ist und somit keine ausreichende Anzahl an Zündimpulsen generiert werden kann.

Die Erfindung hat die Aufgabe die mittlere Wandlerfrequenz im Leerlaufbetrieb möglichst hoch zu halten, damit der Innenwiderstand des Spannungsvervielfachers klein gehalten werden kann.

Diese Aufgabe wird erfindungsgemäß dadurch gelöst, daß eine Spannungsteileranordnung einen von der Ausgangsspannung des Schaltreglers abhängigen Maximalspannungswert erzeugt und daß der Begrenzer den Wert des vom Regler an den Schaltregler gegebenen Regelsignals auf den Maximalspannungswert begrenzt

Erfindungsgegenstand ist somit eine Einrichtung, die die übertragene Energie eines Gleichspannungswandlers durch die variable Begrenzung des maximalen Primärstroms des Schaltreglers und die Abhängigkeit dieser Begrenzung von der Ausgangsspannung des Gleichspannungswandlers beeinflußt, so daß zur Aufrechterhaltung der Leerlaufspannung an einer Grundlast die mittlere Frequenz erhöht wird.

Dies kann vorteilhaft dadurch erreicht werden, daß die Spannungsteileranordnung aus zwei Spannungsteilern besteht, wobei ein erster Spannungsteiler eine zur Ausgangsspannung proportionale Stellgröße erzeugt und ein zweiter Spannungsteiler an einer konstanten Spannung anliegt, daß ein Widerstand die Stellgröße auf den Verbindungspunkt des zweiten Spannungsteilers koppelt, und daß von dem Verbindungspunkt des zweiten Spannungsteilers der Maximalspannungswert ausgekoppelt wird, durch den der maximalen Primärstrom begrenzt wird.

Eine solche Spannungsteileranordnung ermöglicht vorteilhaft eine effektive, frei dimensionierbare Begrenzung des maximalen Eingangsstroms in Abhängigkeit von der Ausgangsspannung des Vorschaltgerätes. Vorteilhaft ist auch, daß diese Anordnung eine sehr einfache Schaltung darstellt, die gegenüber der bekannten Schaltung nur einen geringen Mehraufwand an Bauteilen und Kosten verursacht.

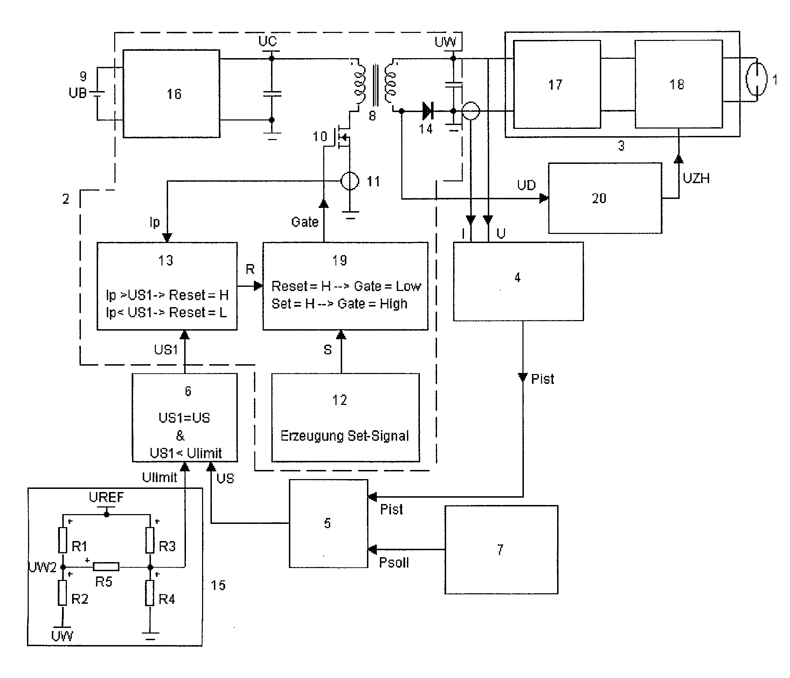

Im folgenden wird ein Ausführungsbeispiel der erfindungsgemäßen Einrichtung anhand der Zeichnung näher erläutert.

Die einzige Figur zeigt eine erfindungsgemäße Einrichtung zum Starten und Betreiben einer Gasentladungslampe (1) in einem Kraftfahrzeug anhand eines Blockschaltbildes. Eine durchbrochen dargestellte Umrandung enthält die Bauelemente eines primärgetakteten Schaltreglers (2), der sehr einfach als Sperrwandler ausgebildet ist. Bei diesem ist die primärseitige Wicklung eines Transformators (8) über ein Eingangsfilter (16) mit einer Spannungsquelle (9), speziell zum Beispiel mit dem Bordnetzspannung (UB), eines Kraftfahrzeuges, verbunden. Weiterhin ist in den Primärkreis des Schaltreglers (2) ein Leistungsschalter (10) und eine Stromerfassungseinrichtung (11) geschaltet.

Der Leistungsschalter (10) erhält über ein RS-Flip-Flop (19) regelmäßige Einschaltsignale von einem Taktgeber (12). Ein Vergleicher (13) schaltet über den Reseteingang des RS-Flip-Flops (19) den Leistungsschalter (10) jeweils dann wieder aus, wenn das von der Stromerfassungseinrichtung (11) an seinen ersten Eingang gegebene Signal über die Höhe des Primärstroms (lp) den Wert des begrenzten Regelsignals (US1) erreicht, den ein Begrenzer (6) auf einen zweiten Eingang des Vergleichers (13) gibt. Die sekundärseitige Wicklung des Transformators (8) ist an einen Gleichrichter (14) angeschlossen, welcher am Ausgang des Schaltreglers (2) eine gegenüber der Spannung des Bordnetzes (9) erhöhte Gleichspannung abgibt.

Der Schaltregler (2) ist somit ein Gleichspannungs-Gleichspannungs-Wandler und bildet eine zur Versorgung der Lampenansteuerungseinrichtung (3) benötigte hochohmige Spannungsquelle aus.

Da die Gasentladungslampe (1) mit Wechselspannung betrieben werden muß, beinhaltet die Lampenansteuerungseinrichtung (3) einen Wechselrichter (17) sowie ein Zündgerät (18), welches die zur Zündung benötigten Hochspannungsimpulse liefert. Dies geschieht unter Mithilfe eines Spannungsvervielfachers (20), der aus einem sekundärseitigen Wechselsignal (UD) des Schaltreglers eine Zündhilfsspannung (UZH) erzeugt, die während des Zündvorgangs zu der Leerlaufspannung des Schaltreglers (2) hinzuaddiert wird.

Zwischen dem Gleichrichter (14) und der Lampenansteuerungseinrichtung (3) ist eine Einrichtung (4) zur Erfassung der vom Schaltregler (2) abgegebenen Leistung eingefügt. Die Einrichtung (4) erzeugt z. B. durch Erfassung von Ausgangsstrom (I) und Ausgangsspannung (U) des Schaltreglers (2) ein Ausgangsleistungssignal (Pist), welches der Ausgangsleistung des Schaltreglers (2) entspricht. Dieses Ausgangsleistungssignal (Pist) gibt die Leistungserfassungseinrichtung (4) auf einen Eingang des Reglers (5). Eine Steuereinrichtung (7) beaufschlagt einen weiteren Eingang des Reglers (5) mit einem Leistungs-Soll-Signal (Psoll). Der Regler (5) erzeugt ein von der Differenz zwischen Leistungs-Soll-Wert (Psoll) und Ausgangsleistungssignal (Pist) und von der Dauer des Vorliegens dieser Differenz abhängiges Regelsignal (US) und führt es dem Begrenzer (6) zu, welcher das Regelsignal (US) auf einen Maximalspannungswert (Ulimit) begrenzt bzw. ein vom Regelsignal abhängiges Signal (US1) abgibt, das auf den Maximalspannungswert (Ulimit) begrenzt ist.

Der Maximalspannungswert (Ulimit) ist von der Ausgangsspannung (UW) des Schaltreglers abhängig, die im dargestellten Ausführungsbeispiel der negativen gefilterten Klemmenspannung des Schaltreglers entspricht. Hierzu ist eine Spannungsteileranordnung (15) vorgesehen, die aus einem ersten Spannungsteiler (R1, R2) besteht, der eine Stellgröße (UW2) erzeugt, die proportional zur Ausgangsspannung (UW) des Schaltreglers ist. Ein zweiter Spannungsteiler (R3, R4) erzeugt aus einer konstanten Referenzspannung (UREF) den zunächst konstanten Maximalspannungswert (Ulimit). Die beiden Spannungsteiler werden über einen Widerstand (R5) verkoppelt, so daß ein variabler, von der Ausgangsspannung (UW) abhängiger Anteil dem Maximalspannungswert (Ulimit) überlagert wird. Die Höhe der Überlagerung wird durch das Verhältnis der Innenwiderstände der Spannungsteiler zueinander und durch den Wert des Widerstands (R5) bestimmt.

Die Funktionsweise der erfindungsgemäßen Einrichtung ist wie folgt:

Zur Regelung der der Gasentladungslampe (1) zugeführten Leistung erfaßt die Leistungserfassungseinrichtung (4) den Wert der momentan vom Gleichrichter (14) an die Lampenansteuerungseinrichtung (3) abgegebenen Ausgangsleistung (Pist).

Dieser Leistungs-Ist-Wert wird neben einem Leistungs-Soll-Wert (Psoll), welchen die Steuereinrichtung (7) vorgibt, dem Regler (5) zugeführt, welcher als I-Regler ausgebildet ist oder einen I-Regler beinhaltet und die Leistungsdifferenz (Psoll minus Pist) aufintegriert.

Das so gebildete Reglersignal (US) gibt der Regler (5) an den Begrenzer (6), welcher dessen Wert auf einen Maximalwert (Ulimit) begrenzt, falls er einen vorgegebenen Maximalwert (Ulimit) übersteigt. Das so begrenzte Reglersignal (US1) gibt der Begrenzer (6) als Soll-Wert an den Vergleicher (13), welcher die Primärstromstärke (Ip) des Schaltreglers (2) steuert.

Der Strom durch die Primärspule des Transformators (8) des Schaltreglers (2) wird durch den Taktgeber (12) und das RS-Flip-Flop(19) periodisch über den Leistungsschalter (10) eingeschaltet und steigt dann zeitlich linear an. Ein der Stärke des Primärstroms (Ip) entsprechendes Signal gibt die Stromerfassungseinrichtung (11) an den Vergleicher (13), welcher durch Zurücksetzen des RS-Flip-Flops (19) über den Leistungsschalter (10) den Primärstrom (Ip) abschaltet, sobald das von der Stromerfassungseinrichtung (11) abgegebene Signal das vom Begrenzer (6) vorgegebene Signal (US1) erreicht. Nach dem Abschalten des Primärstromes (Ip) überträgt der Transformator (8) die in seiner Primärspule gespeicherte Energie auf seine Sekundärspule. Da die jeweilige Einschaltdauer des Leistungsschalters (10), und damit die Höhe des Primärstromes (lp) ein Maß für die übertragene Leistung darstellt, erhält man so einen Regelkreis zur Konstanthaltung der Ausgangsleistung des Schaltreglers (2).

Die Höhe der sich so einstellenden Ausgangsleistung des Schaltreglers (2) gibt die Steuereinrichtung (7) dem Regler (5) in Form des Leistungs-Soll-Wertes (Psoll) vor. Dieser Leistungs-Soll-Wert (Psoll) entspricht etwa der Brennleistung der Gasentladungslampe (1).

Muß der Schaltregler viel Leistung übertragen, so steigt der Wert des Regelsignals (US) und damit auch der Primärstrom (Ip) an, da der Primärstrom (lp) durch den Transformator (8), zusammen mit dessen Induktivität die pro Schaltzyklus gespeicherte Energie E und in Verbindung mit der Schaltfrequenz f die übertragene Leistung P = E * f bestimmt. Das Regelsignal (US) wird auf den Wert Ulimit begrenzt, um zu verhindern, daß der Primärstrom (lp) einen maximalen Wert überschreitet und den Kern des Transformators (8) sättigt. Hierdurch wird automatisch auch die maximal übertragbare Leistung begrenzt.

Durch die Verknüpfung mit der negativen Ausgangsspannung (UW) wird im Leerlauf bei betragsmäßig maximaler Ausgangsspannung (UW) das Maximalspannungssignal (Ulimit) verkleinert. Die Reduzierung des Maximalspannungssignals (Ulimit) führt automatisch zu einer Reduzierung des begrenzten Regelsignals (US1) und damit zu einer Reduzierung des maximalen Primärstroms (Ip). Die übertragene Energie wird geringer, dadurch wird der Wandler gezwungen, die mittlere Schaltfrequenz zu erhöhen um die Leerlaufspannung an der Grundlast aufrecht zu erhalten. Durch die Erhöhung der Wandlerfrequenz wiederum kann der Innenwiderstand des Spannungsvervielfachers während der Zündphase gering gehalten werden.

### Bezugszeichen

- 1: Gasentladungslampe
- 2: Schaltregler
- 3: Lampenansteuerungseinrichtung
- 4: Einrichtung zur Leistungserfassung (Leistungserfassungeinrichtung)
- 5: Regler
- 6: Begrenzer
- 7: Steuereinrichtung
- 8: Transformator
- 9: Spannungsquelle (Bordnetz)
- 10: Leistungsschalter
- 11: Stromerfassungseinrichtung
- 12: Taktgeber
- 13: Vergleicher
- 14: Gleichrichter
- 15: Spannungsteileranordnung
- 16: Eingangsfilter
- 17: Wechselrichter
- 18: Zündgerät
- 19: RS-Flip-Flop
- 20: Spannungsvervielfacher

- (R1, R2): erster Spannungsteiler
- (R3, R4): zweiter Spannungsteiler
- R5: Widerstand
- I: Ausgangsstrom
- lp: Primärstrom
- Pist: Ausgangsleistung(ssignal)
- Psoll: Leistungs-Soll-Wert (-signal)

- UB: Bordnetzspannung
- UD: sekundärseitiges Wechselsignal
- UW: Ausgangsspannung
- UW2: Stellgröße
- Ulimit: Maximalspannungswert
- UREF: konstante Referenzspannung
- US: Regelsignal
- US1: begrenztes Regelsignal
- UZH: Zündhilfsspannung

## Patentansprüche

1. Einrichtung zum Starten und Betreiben einer Gasentladungslampe (1) in einem Kraftfahrzeug, mit einem primärgetakteten Schaltregler (2) zur Versorgung einer Lampenansteuerungseinrichtung (3) für die Gasentladungslampe (1), mit einer Einrichtung (4) zur Erfassung der Ausgangsleistung (Pist) des Schaltreglers (2), mit einem Regler (5), der aufgrund der Ausgangsleistung (Pist) ein Regelsignal (US) zur Beeinflussung des Primärstroms (Ip) des Schaltreglers (2) erzeugt, mit einem Begrenzer (6), zur Begrenzung des Regelsignals (US), mit einer Steuereinrichtung (7), die der Gasentladungslampe (1) einen Leistungssollwert (Psoll) vorgibt, und mit einem Spannungsvervielfacher (20), der aus einem sekundärseitigen Wechselsignal (UD) des Schaltreglers (2) eine Zündhilfsspannung (UZH) erzeugt, die während des Zündvorgangs zu der Leerlaufspannung des Schaltreglers (2) hinzuaddiert wird,
**dadurch gekennzeichnet,**
**daß** eine Spannungsteileranordnung (15) einen von der Ausgangsspannung (UW) des Schaltreglers abhängigen Maximalspannungswert (Ulimit) erzeugt und daß der Begrenzer (6) den Wert des vom Regler (5) an den Schaltregler (2) gegebenen Regelsignals (US1) auf den Maximalspannungswert (Ulimit) begrenzt.

2. Einrichtung nach Anspruch 1, **dadurch gekennzeichnet, daß** die Spannungsteileranordnung (15) aus zwei Spannungsteilern besteht, wobei ein erster Spannungsteiler (R1, R2) eine zur Ausgangsspannung (UW) proportionale Stellgröße (UW2) erzeugt und ein zweiter Spannungsteiler (R3, R4) an einer konstanten Spannung (UREF) anliegt, daß ein Widerstand (R5) die Stellgröße (UW2) auf den Verbindungspunkt des zweiten Spannungsteilers (R3, R4) koppelt, und daß von dem Verbindungspunkt des zweiten Spannungsteilers der Maximalspannungswert (Ulimit) ausgekoppelt wird.

3. Einrichtung nach Anspruch 1, **dadurch gekennzeichnet, daß** der primärgetaktete Schaltregler (2) als pulsweitenmodulierter Sperrwandler ausgeführt ist.
